# EUROPEAN PATENT APPLICATION

(11) **EP 2 154 895 A1**
(43) Date of publication of application: **17.02.2010**
(21) Application number: 08305484.1
(22) Date of filing: 15.08.2008
(51) Int. Cl.: H04N 7/26

(54) **Method and apparatus for entropy encoding blocks of transform coefficients of a video signal using a zigzag scan sequence, and method and apparatus for a corresponding decoding**

(71) Applicant: Thomson Licensing, 92443 Issy-les-Moulineaux Cedex (FR)
(72) Inventor: An, Jicheng, 100084 Beijing (CN); Chen, Quqing, 100085 Beijing (CN); Chen, Zhibo, 100085 Beijing (CN); Teng, Jun, 100085 Beijing (CN)
(74) Representative: Hartnack, Wolfgang

(57) **Abstract**

A key in efficient image compression is to explore source correlation so as to find a compact representation of coded image data. For encoding DCT transformed and quantised pixel blocks, based on statistical properties of such DCT transform, the coefficient blocks are scanned in a known zigzag line sequence. According to the invention, when combining DCT with DWT by DCT transforming DWT coefficient blocks, the DCT coefficient blocks of the LH, HL and HH subbands of the DWT blocks are scanned using a different zigzag scan for each one of these subbands, followed by entropy encoding.

## Description

The invention relates to a method and to an apparatus for entropy encoding blocks of transform coefficients of a video signal using a zigzag scan sequence for the transform coefficients in a block, and to a corresponding method and apparatus for decoding.

### Background

A key in efficient image compression is to explore source correlation so as to find a compact representation of coded image data. This can be achieved by transforming the original image data, projecting it on a basis of functions, and then encoding that transform. Over the past few decades, various spatial transforms, such as the KLT (Karhunen Loeve Transform), DCT (Discrete Cosine Transform, cf. N.Ahmed, T.Natarajan, K.R.Rao, "Discrete cosine transform", IEEE Transactions on Computers, 23:pp.90-93, January 1974), and DWT (Discrete Wavelet Transform, cf. S.Mallat, "A Theory for Multiresolution Signal Decomposition: The Wavelet Representation", IEEE Transactions on Pattern Analysis and Machine Intelligence, Vol.11, No.7, pp.674-693, July 1989, and M.Antonini, M.Barlaud, P.Mathieu, I.Daubechies, "Image Coding Using Wavelet Transform", IEEE Transactions on Image Processing, Vol.1, No.2, pp.205-220, April 1992) have been developed in order to explore the source correlation. Fourier representation of signals is known to be very effective in analysis of time-invariant (stationary) periodic signals. The performance of DCT compares closely with that of KLT, which is considered to be optimal in the above N.Ahmed et al. article. Wavelet representation provides a versatile mathematical tool to analyse transient, time-variant (non-stationary) signals that may not be statistically predictable especially at the region of discontinuities - a special feature that is typical of images having discontinuities at the edges, cf. the above Mallat et al. and Antonini et al. articles.

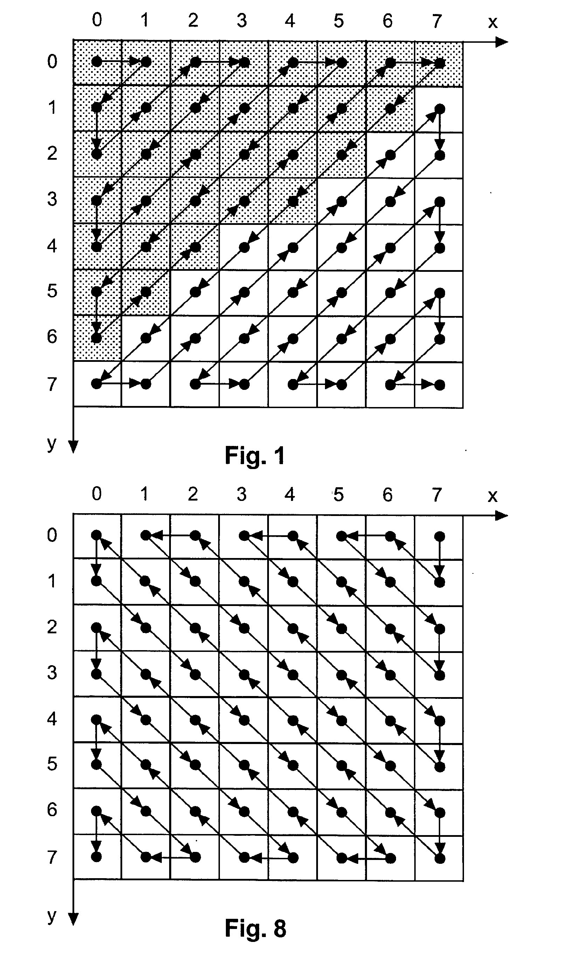

There are also some authors concentrating on the combination of DCT and DWT processing. In H.S.Dee, V.Jeoti, "On image compression: a DWT-DCT algorithm", Sixth International Symposium on Signal Processing and its Applications, Vol.2, pp.553-556, 13-16 August 2001, a hybrid transform is presented that performs one-level wavelet decomposition of any image followed by a block-based DCT in its low pass subband. This method alleviates the blocking effects to some extent and significantly outperforms the DCT-based JPEG coder.
In US 2008/0008395 A1, after the block-based DCT, the transform coefficients are re-arranged into a number of frequency groups such that the coefficients locating at the same coordinate in all transform blocks are in one group. Then, one or more such groups are further decomposed by DWT. Combined with the subsequent quantisation and coding schemes, this method provides significant improvement to the known peer image coding systems.
In H.Kondo, H.Kou, "Wavelet Image Compression using Subblock DCT", Ninth IEEE International Conference on Networks, 2001, the block-based DCT is applied to the DWT details, and thereafter the standard JPEG processing as described e.g. in W.B.Pennebaker, J.L.Mitchell, "JPEG Still Image Data Compression Standard", Chapman&Hall, New York, 1993, is used for the encoding.
In the JPEG coder, the quantised DCT coefficients of a transform block are scanned in the known zigzag order as shown in Fig. 1. Such zigzag scan is also used in MPEG2 Video and MPEG4 AVC (H.264), cf. Th.Wiegand, G.J.Sullivan, G.Bjøntegaard, A.Luthra, "Overview of the H.264/AVC Video Coding Standard", IEEE Transactions on Circuits and Systems for Video Technology, Vol.13, No.7, pp.560-576, July 2003. This kind of block scanning is based on the property of natural images which in the transform domain usually have more energy in the low (horizontal and vertical) frequencies than in the high frequencies. Therefore, following transform and quantisation, there are more non-zero coefficients in the upper-left area of the coefficient block than (in particular) in the bottom-right area of the block, and the absolute values of the coefficients in the upper-left area of the coefficient block are usually larger than those in the bottom-right area of the block. The zigzag scan arranges the coefficients in the block along a single line in zigzag form, from the upper-left edge to the bottom-right edge. In this way, statistically, the coefficients with greater absolute value will more likely appear at the front end of the scan line while the coefficients having smaller absolute value or zero value tend to appear at the back end of that scan line. This benefits entropy coding a lot because most zeros are arranged at the rear of the scan line and need not be encoded. Meanwhile, the statistical monotonic decrease in the absolute value of the non-zero coefficients can be exploited in the context-based entropy coding, e.g. the context-based variable-length coding CAVLC in H.264/AVC.

US-A-5754232 shows hardware for a zigzag scanning and an alternate scanning that is similar to the zigzag scanning, in which alternate scanning the sequence also begins in the top left edge of a block.

### Invention

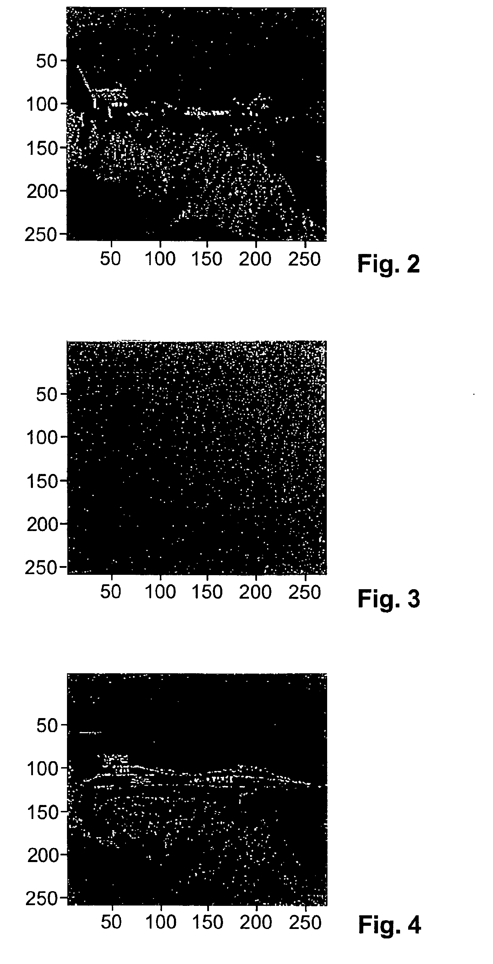

However, the above-described properties of energy distribution of the DCT coefficients may not hold true when a DCT is employed to the DWT details. Figures 2 and 3 show the energy distribution of the one-level 2D-DWT details of 512*512 pixels test image Airplane before and after performing DCT, respectively. For demonstration purposes, the DCT block size is 256*256, but a smaller block size has a similar energy distribution. Table 1 shows the energy percentage for each of four half-divisions of a block in the subbands of DWT details, for five different test images. For example, in one subband the energy percentage of the upper-left half is defined as the ratio of the energy in the upper-left half of all blocks in that subband to the total energy in all blocks of that subband. The coefficients related to the upper-left half of a block are shown in the shadowed or hatched area in Fig. 1 and represent the first half of the zigzag sequence. The energy calculations for the upper-right, bottom-left and bottom-right halves are defined in a corresponding way. The block size of the DCT used in Table 1 is 8*8. The maximum energy percentage value in each subband is emphasised.

**Table 1**

| image | subband | Up-left | Up-right | Bottom-left | Bottom-right |
|---|---|---|---|---|---|
| Airplane (512*512) | HL | 53.81% | **83.77%** | 16.23% | 46.19% |
| | LH | 80.95% | 14.62% | **85.38%** | 19.05% |
| | HH | 28.90% | 42.57% | 57.43% | **71.10%** |
| Goldhill (512*512) | HL | 60.05% | **79.82%** | 20.18% | 39.95% |
| | LH | 55.88% | 29.65% | 70.35 | 44.12% |
| | HH | 39.86% | 47.94% | 52.06% | **60.14%** |
| Lena (512*512) | HL | 42.68% | **73.22%** | 26.78% | 57.32% |
| | LH | 35.31% | 31.74% | **68.26%** | 64.69% |
| | HH | 34.66% | 41.67% | 58.33% | **65.34%** |
| Fruits (480*512) | HL | 28.62% | **87.45%** | 12.55% | 71.38% |
| | LH | 45.19% | 19.12% | **80.88%** | 54.81% |
| | HH | 27.60% | 55.07% | 44.93% | **72.04%** |
| Cafe (2048*2560) | HL | 53.52% | **79.58%** | 20.42% | **46.48%** |
| | LH | 58.60% | 20.16% | **79.84%** | 41.40% |
| | HH | 28.98% | 46.44% | 53.56% | **71.02%** |

However, the energy of DCT coefficients of DWT details is generally not concentrated on the upper-left half of a block. Therefore it is normally inappropriate to scan the DCT coefficients of DWT detail blocks according to the original zigzag order shown in Fig. 1.

A problem to be solved by the invention is to provide an improved way of scanning the coefficients of blocks of DCT coefficients that are derived from a corresponding block of DWT data or coefficients. This problem is solved by the methods disclosed in claims 1 and 3. Apparatuses that utilise these method are disclosed in claims 2 and 4, respectively.

The invention is related to entropy encoding/decoding of image/video signals. The original zigzag scan order usually used for DCT coefficients is adapted to the character of DWT detail data. Three modified zigzag scan orders based on the character of the three subbands of DWT details are used. Thereby such DCT coefficients having greater absolute values will more likely appear at the front end of the scanning sequence while the coefficients with smaller absolute value or zero value will more likely appear at the back-end of the scanning sequence. This benefits the entropy coding a lot because most ones of the zeros occurring at the rear of the scan sequence need not be encoded and the statistical monotonic decrease in the absolute values of the non-zero coefficients can be used in the context-based entropy coding. Instead of using a DCT transform of the DWT output, an integer approximation of the DCT (e.g. like in AVC/H.264) or a Hadamard transform can be used. Conversely, at decoding side in such case an integer approximation of the inverse DCT or the inverse Hadamard transform, respectively, is used.

In principle, the inventive encoding method is suited for entropy encoding blocks of transform coefficients of a video signal using a zigzag scan sequence for the transform coefficients in a block, said method including the steps:
- performing a DWT transform of a current pixel data block of said video signal, thereby providing an LL, an LH, an HL and an HH subband coefficient block for said current pixel data block;
- carrying out a transform different than DWT for said DWT LL, LH, HL and HH subband coefficient blocks;
- entropy encoding said transformed DWT LL, LH, HL and HH subband coefficient blocks, thereby using for each type of subband a different kind of zigzag scan.

In principle the inventive encoding apparatus is suited for entropy encoding blocks of transform coefficients of a video signal using a zigzag scan sequence for the transform coefficients in a block, said apparatus including:
- means being adapted for performing a DWT transform of a current pixel data block of said video signal, thereby providing an LL, an LH, an HL and an HH subband coefficient block for said current pixel data block;
- means being adapted for carrying out a transform different than DWT for said DWT LL, LH, HL and HH subband coefficient blocks;
- means being adapted for entropy encoding said transformed DWT LL, LH, HL and HH subband coefficient blocks, thereby using for each type of subband a different kind of zigzag scan.

In principle, the inventive decoding method is suited for entropy decoding an encoded video signal that was encoded according to the method of claim 1, said method including the steps:
- entropy decoding said transformed and entropy encoded DWT LL, LH, HL and HH subband coefficient blocks, thereby using for each type of subband a different kind of zigzag scan;
- carrying out for said entropy decoded coefficient blocks an inverse transform different than inverse DWT;
- performing for a current inversely transformed block of said LL, LH, HL and HH subbands an inverse DWT transform, thereby providing a decoded video signal.

In principle the inventive decoding apparatus is suited for entropy decoding an encoded video signal that was encoded according to the method of claim 1, said apparatus including:
- means being adapted for entropy decoding said transformed and entropy encoded DWT LL, LH, HL and HH subband coefficient blocks, thereby using for each type of subband a different kind of zigzag scan;
- means being adapted for carrying out for said entropy decoded coefficient blocks an inverse transform different than inverse DWT;
- means being adapted for performing for a current inversely transformed block of said LL, LH, HL and HH subbands an inverse DWT transform, thereby providing a decoded video signal.

Advantageous additional embodiments of the invention are disclosed in the respective dependent claims.

### Drawings

Exemplary embodiments of the invention are described with reference to the accompanying drawings, which show in:
- Fig. 1: known zigzag scan for an 8*8 block;
- Fig. 2: energy distribution of the Airplane test image of one-level two-dimensional DWT HL subband details before performing DCT;
- Fig. 3: energy distribution of the Airplane test image of one-level two-dimensional DWT HL subband details following DCT operation;
- Fig. 4: energy distribution of the Airplane test image of one-level two-dimensional DWT LH subband details before performing DCT;
- Fig. 5: energy distribution of the Airplane test image of one-level two-dimensional DWT LH subband details following DCT operation;
- Fig. 6: energy distribution of the Airplane test image of one-level two-dimensional DWT HH subband details before performing DCT;
- Fig. 7: energy distribution of the Airplane test image of one-level two-dimensional DWT HH subband details following DCT operation;
- Fig. 8: modified zigzag scan for an 8*8 DCT coefficient block of the DWT HL subband;
- Fig. 9: modified zigzag scan for an 8*8 DCT coefficient block of the DWT LH subband;
- Fig. 10: modified zigzag scan for an 8*8 DCT coefficient block of the DWT HH subband;
- Fig. 11: example of an inventive encoder;
- Fig. 12: example of an inventive decoder.

### Exemplary embodiments

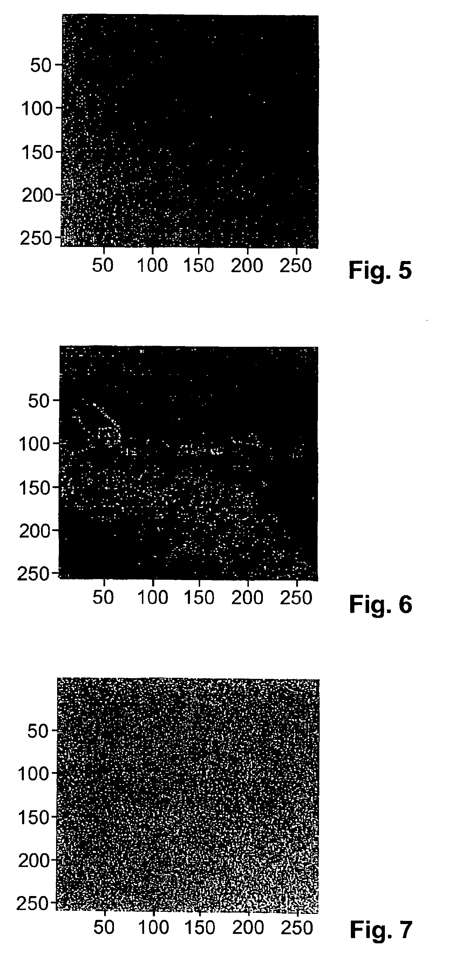

The DWT LL subband is processed using the known zigzag scan of Fig. 1. However, it is apparent from Fig. 3 and Table 1 that the higher-energy DCT coefficients of the DWT HL subband are concentrated in the upper-right area of the block. It is apparent from Fig. 5 and Table 1 that the higher-energy DCT coefficients of the DWT LH subband are concentrated in the bottom -left area of the block. It is apparent from Fig. 7 and Table 1 that the higher-energy DCT coefficients of the DWT HH subband are concentrated in the bottom-right area of the block.
This phenomena can be explained by the DWT character: following the 2D-DWT decomposition, the HL subband has high-magnitude frequencies in the horizontal direction and low-magnitude frequencies in the vertical direction, the LH subband has high-magnitude frequencies in the vertical direction, and low-magnitude frequencies in the horizontal direction, and the HH subband has high-magnitude frequencies in both the horizontal and the vertical directions.

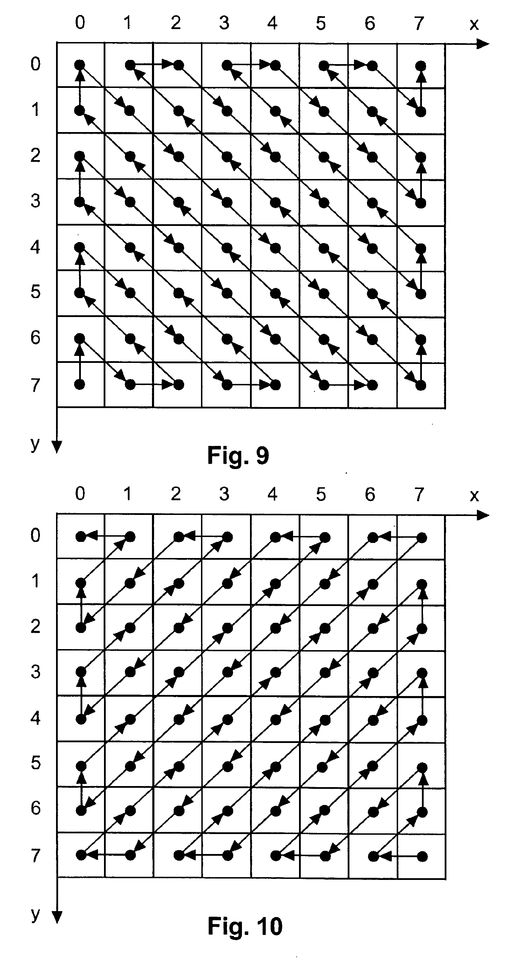

According to the invention, three modified zigzag scan orders are used for the above three DWT bands. They are shown in figures 8 to 10. The DCT coefficients of the DWT HL subband are scanned from the top-right corner block position along bottom-right/upper-left diagonals to the bottom-left corner block position, as shown in Fig. 8.
The DCT coefficients of the DWT LH subband are scanned from the bottom-left corner block position along upper-left/ bottom-right diagonals to the top-right corner block position, as shown in Fig. 9.
The DCT coefficients of the DWT HH subband are scanned from the bottom-right corner block position along bottom-left/ upper-right diagonals to the top-left corner block position, as shown in Fig. 10.

By using these alternative zigzag scanning, the DCT coefficients of DWT details having bigger absolute values are more likely to appear at the front end of the scan sequence while the DCT coefficients having smaller absolute values or zeros tend to appear at the back-end of the scan sequence. This reduces the output data rate of the entropy coding a lot because most zeros need not be encoded, and the statistical monotonic decrease in the absolute values of the non-zero coefficients can be used in the context based entropy coding.

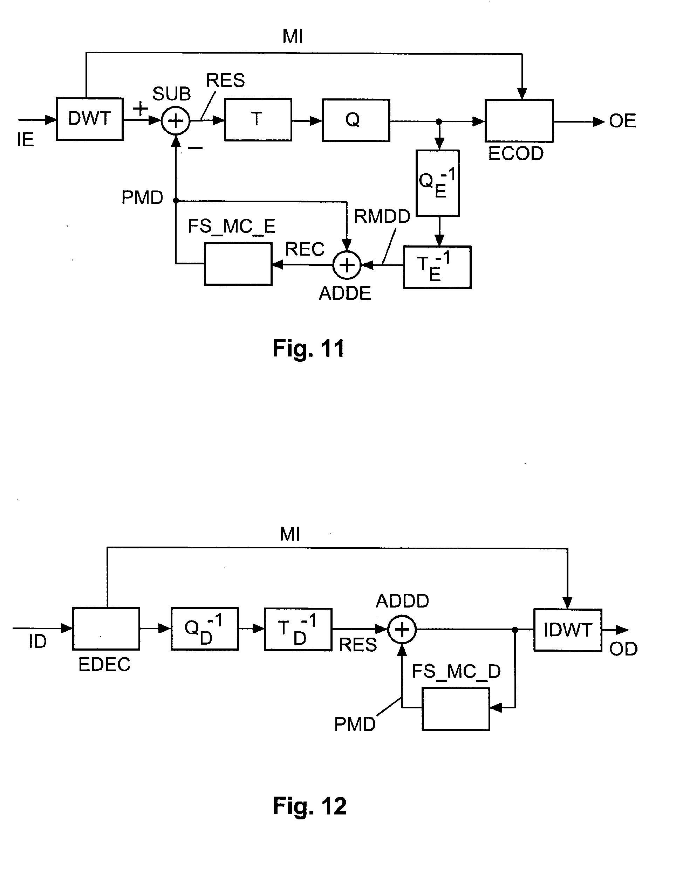

The video data input signal IE of the encoder in Fig. 11 includes pixel data for e.g. macroblocks or blocks. After the macroblocks or blocks of input signal IE have passed a Discrete Wavelet Transform DWT, the picture data are processed e.g. in a manner corresponding to the MPEG2 Video or the MPEG4 AVC standard, but additionally with use of the inventive scan mode feature. In the case of intra (i.e. intraframe or intra-field) DWT data to be encoded, a subtractor SUB simply allows these to pass for a processing in transform means T and quantising means Q and entropy encoder step or stage ECOD, which outputs the encoder output signal OE. ECOD can, for example, carry out Huffman coding for the transformed and quantised coefficients, and add header information and motion vector data for its output bit stream OE. The DWT transform step/stage signals to entropy encoder step/stage ECOD which kind of subband (LL, LH, HL, HH) it has just processed and encoder ECOD uses the corresponding zigzag scan when encoding the DCT transformed and quantised DWT coefficients of the current block. The corresponding mode information MI (DWT subband mode and/or scan mode) controls encoder step/stage ECOD and can be attached to the output bit stream OE. The quantising means Q and the inverse quantising means Q_{E}⁻¹ can be controlled by the occupancy level of the encoder buffer ENCB.
In case an inter coding of the DWT coefficients is used, predicted DWT block or macroblock data PMD are subtracted from the DWT output signal in the subtractor SUB, and the resulting difference data RES are fed to the entropy encoder ECOD via the transform means/stage/step T and the quantising means/stage/step Q. The output signal of Q is also processed in inverse quantising means/stage/step Q_{E}⁻¹, the output signal of which is fed via inverse transform means/stage/step T_{E}⁻¹ to the combiner step/stage ADDE in the form of reconstructed block or macroblock difference data RMDD. The output signal of ADDE is buffer-stored in a frame store in motion estimation and compensation means/stage/step FS_MC_E, which carry out motion compensation for reconstructed block or macroblock data and output block or predicted macroblock data PMD to the subtracting input of SUB and to the other input of the combiner ADDE.

In Fig. 12, data of the encoded video input signal ID is fed via entropy decoder means/stage/step EDEC, inverse quantising means Q_{D}⁻¹ and inverse transform means T_{D}⁻¹ (in case of non-intra data as residual frame data RES) to a combiner step/stage ADDD. In case of intra block or macroblock data the output of T_{D}⁻¹ simply passes ADDD. In case of non-intra block or macroblock data, the output signal of ADDD is buffer-stored in a frame store in motion compensation means/ stage/step FS_MC_D, which effect a motion compensation for reconstructed block or macroblock data. The block or macroblock data PMD predicted in FS_MC_D are passed to the second input of the combiner ADDD. In these steps or stages the picture data are processed e.g. in a manner corresponding to the MPEG2 Video or the MPEG4 AVC standard, respectively, but additionally with use of the inventive scan mode feature. Entropy decoder means/stage/step EDEC decode and/or evaluate header information and motion vector data and can carry out Huffman decoding for the coefficients. If present in the input signal ID, EDEC extracts the mode information MI (i.e. evaluates a corresponding key word or number representing the DWT subband mode and/or the scan mode) from the received bit stream ID. The DWT encoded output signal of T_{D}⁻¹ or ADDD, respectively, is inversely transformed in inverse Discrete Wavelet Transform step/stage IDWT, which may use signal MI and which outputs the decoded output signal OD.
In Fig. 11 and 12, Q_{E}⁻¹, Q_{D}⁻¹, T_{E}⁻¹, T_{D}⁻¹ and EDEC have a function which is the corresponding inverse of the function of Q, T and ECOD, respectively.

The inventive subband-based adaptive scan method can be used in any applications that incorporate wavelet transform and other transform and entropy coding.

## Claims

1. Method for entropy encoding blocks of transform coefficients of a video signal (IE) using a zigzag scan sequence for the transform coefficients in a block, said method including the steps:
- performing (DWT) a DWT transform of a current pixel data block of said video signal, thereby providing an LL, an LH, an HL and an HH subband coefficient block for said current pixel data block;
- carrying out (T) a transform different than DWT for said DWT LL, LH, HL and HH subband coefficient blocks;
- entropy encoding (Q, ECOD) said transformed DWT LL, LH, HL and HH subband coefficient blocks, thereby using for each type of subband a different kind of zigzag scan.

2. Apparatus for entropy encoding blocks of transform coefficients of a video signal (IE) using a zigzag scan sequence for the transform coefficients in a block, said apparatus including:
- means (DWT) being adapted for performing a DWT transform of a current pixel data block of said video signal, thereby providing an LL, an LH, an HL and an HH subband coefficient block for said current pixel data block;
- means (T) being adapted for carrying out a transform different than DWT for said DWT LL, LH, HL and HH subband coefficient blocks;
- means (Q, ECOD) being adapted for entropy encoding said transformed DWT LL, LH, HL and HH subband coefficient blocks, thereby using for each type of subband a different kind of zigzag scan.

3. Method for entropy decoding an encoded video signal that was encoded according to the method of claim 1, said method including the steps:
- entropy decoding (EDEC, Q⁻¹) said transformed and entropy encoded DWT LL, LH, HL and HH subband coefficient blocks, thereby using for each type of subband a different kind of zigzag scan;
- carrying out for said entropy decoded coefficient blocks an inverse transform (T⁻¹) different than inverse DWT;
- performing (IDWT) for a current inversely transformed block of said LL, LH, HL and HH subbands an inverse DWT transform, thereby providing a decoded video signal (OD).

4. Apparatus for entropy decoding an encoded video signal that was encoded according to the method of claim 1, said apparatus including:
- means (EDEC, Q⁻¹) being adapted for entropy decoding said transformed and entropy encoded DWT LL, LH, HL and HH subband coefficient blocks, thereby using for each type of subband a different kind of zigzag scan;
- means (T⁻¹) being adapted for carrying out for said entropy decoded coefficient blocks an inverse transform different than inverse DWT;
- means (IDWT) being adapted for performing for a current inversely transformed block of said LL, LH, HL and HH subbands an inverse DWT transform, thereby providing a decoded video signal (OD).

5. Method according to claim 1 or apparatus according to claim 2, wherein said different transform is a DCT or an integer approximation thereof or a Hadamard transform, or method according to claim 3 or apparatus according to claim 4, wherein said different inverse transform is an inverse DCT or an inverse integer approximation thereof or an inverse Hadamard transform, respectively.

6. Method according to claim 1, 3 or 5, or apparatus according to claim 2, 4 or 5, wherein said block of coefficients has a size of 8*8 or 16*16.

7. Method according to one of claims 1, 3, 5 and 6, or apparatus according to one of claims 2 and 4 to 6, wherein the transform coefficients of the DWT LL subband are scanned from the top-left corner block position along upper-right/bottom-left diagonals to the bottom-right corner block position,
and wherein the transform coefficients of the DWT HL subband are scanned from the top-right corner block position along bottom-right/upper-left diagonals to the bottom-left corner block position,
and wherein the transform coefficients of the DWT LH subband are scanned from the bottom-left corner block position along upper-left/bottom-right diagonals to the top-right corner block position,
and wherein the transform coefficients of the DWT HH subband are scanned from the bottom-right corner block position along bottom-left/upper-right diagonals to the top-left corner block position.

8. Digital video signal that is encoded according to the method of one of claims 1 and 5 to 7.

9. Storage medium, for example an optical disc, that contains or stores, or has recorded on it, a digital video signal according to claim 8.
